Europäisches Patentamt

**European Patent Office**

Office européen des brevets

(19)

(11) Numéro de publication: **0 183 580**
**B1**

(12) FASCICULE DE BREVET EUROPEEN

(45) Date de publication du fascicule du brevet:
**24.06.87**

(51) Int. Cl.⁴: **B 60 R 16/02**

(21) Numéro de dépôt: **85401992.4**

(22) Date de dépôt: **14.10.85**

(54) **Dispositif de transmission par couplage magnétique, d'informations issues d'organes de commande montés sur un volant de direction, à un organe solidaire d'un véhicule.**

(30) Priorité: **06.11.84 FR 8416881**

(43) Date de publication de la demande:
**04.06.86 Bulletin 86/23**

(45) Mention de la délivrance du brevet:
**24.06.87 Bulletin 87/26**

(84) Etats contractants désignés:
**DE GB IT SE**

(56) Documents cités:
**EP - A - 0 087 138**
**DE - A - 2 732 626**

**PATENTS ABSTRACTS OF JAPAN, vol. 7, no. 226 (E-202) [1371], 7 octobre 1983**

(73) Titulaire: **ACIERS ET OUTILLAGE PEUGEOT Société dite:, F-25400 Audincourt (Doubs) (FR)**

(72) Inventeur: **Rudi, Alain, 2 rue Collin, F-90000 Essert (FR)**
Inventeur: **Bertot, Maurice, 69 bis rue de Belfort, F-25200 Montbeliard (FR)**
Inventeur: **Coullerut, Jacques, 45 H rue d'Audincourt, F-25230 Seloncourt (FR)**

(74) Mandataire: **Bressand, Georges et al, c/o CABINET LAVOIX 2 Place d'Estienne d'Orves, F-75441 Paris Cedex 09 (FR)**

## Description

La présente invention se rapporte à des dispositifs de transmission d'informations, issues d'un volant de direction, à un organe solidaire d'un véhicule et notamment de transmission des ordres, donnés par le conducteur du véhicule, traduits par des actions sur des organes de commande solidaires du volant, à un système de reconnaissance de l'information solidaire du véhicule.

Il existe dans l'état de la technique des dispositifs de transmission d'informations qui utilisent des contacts tournants à frottement pour réaliser une liaison électrique entre les organes de commande portés par le volant mobile et le système de reconnaissance des informations solidaire du véhicule. Ces dispositifs présentent des inconvénients liés à l'utilisation des contacts tournants à frottement. En effet, les contacts tournants à frottement se détériorent à l'usage, compromettant ainsi la qualité de la transmission.

D'autre part, on connaît également d'après le brevet JP-A-58 115 945 un dispositif de transmission de puissance et d'informations entre une partie fixe d'une colonne de direction de véhicule et un volant de direction. Ce dispositif comprend un transformateur rotatif dont les noyaux magnétiques sont solidaires l'un du volant et l'autre de la partie fixe de la colonne de direction, et sont séparés par un entrefer. Des bobines solidaires des noyaux magnétiques assurent un couplage électromagnétique permettant la transmission d'informations et de puissance entre la partie fixe de cette colonne de direction et le volant de direction. Mais aucun moyen n'est prévu pour maintenir constant l'entrefer entre les noyaux magnétiques.

Le document EP-A-0 087 138 décrit un système d'alimentation comprenant une paire de bobines circulaires disposées en regard l'une de l'autre autour d'un arbre rotatif solidaire d'un volant de direction. L'une des bobines est fixée du côté du volant et l'autre du côté de la colonne de direction du véhicule, formant ainsi un convertisseur continu-continu.

Le document DE-A-2 732 626 décrit un dispositif de liaison pour la transmission de signaux logiques. Ce dispositif comporte également une bobine d'émission disposée en regard d'une bobine de réception de façon à assurer un couplage entre les deux parties du dispositif.

Cependant les dispositifs décrits dans ces documents présentent un certain nombre d'inconvénients, notamment du fait que l'entrefer entre les deux parties fixe et mobile n'est pas maintenu rigoureusement constant, ce qui nuit à la précision du couplage magnétique et donc à la qualité de la transmission d'informations entre ces deux parties.

Le but de l'invention est donc de proposer un dispositif de transmission des informations, provenant de plusieurs organes de commande montés sur un volant, à un système de reconnaissance des informations solidaires du véhicule, qui supprime toute liaison électrique entre le volant mobile et le système de reconnaissance fixe et dont la qualité de la transmission permet une reconnaissance précise desdites informations.

Par rapport au brevet JP-A-58 115 945 qui décrit déjà un dispositif de transmission d'informations issues de plusieurs organes de commande montés sur un volant de direction porté par une colonne de direction d'un véhicule automobile à un système de reconnaissance des informations solidaire du véhicule, comportant un transformateur dont les enroulements primaire et secondaire sont montés à rotation l'un par rapport à l'autre et portés chacun par une portion de circuit magnétique, l'une desdites portions de circuit magnétique étant solidaire du volant de direction et l'autre du véhicule, les surfaces des portions de circuit magnétique en regard l'une de l'autre étant circulaires et définissant entre elles un entrefer, l'invention est caractérisée en ce que des moyens sont destinés à maintenir constant l'entrefer entre lesdites portions de circuit magnétique dudit transformateur lors du déplacement angulaire relatif desdites portions de circuit magnétique.

L'invention sera mieux comprise à l'aide de la description qui va suivre, donnée uniquement à titre d'exemple et faite en se référant aux dessins annexés, sur lesquels:

— la Fig. 1 représente une coupe partielle d'un volant de direction muni d'un transformateur entrant dans la constitution d'un dispositif de transmission selon l'invention;

— les Fig. 2 et 3 représentent différents moyens permettant de maintenir l'entrefer, entre les portions de circuit magnétique du transformateur, constant;

— la Fig. 4 représente un schéma synoptique d'un dispositif de transmission selon l'invention;

— la Fig. 5 est un schéma d'une réalisation d'un dispositif de transmission selon l'invention.

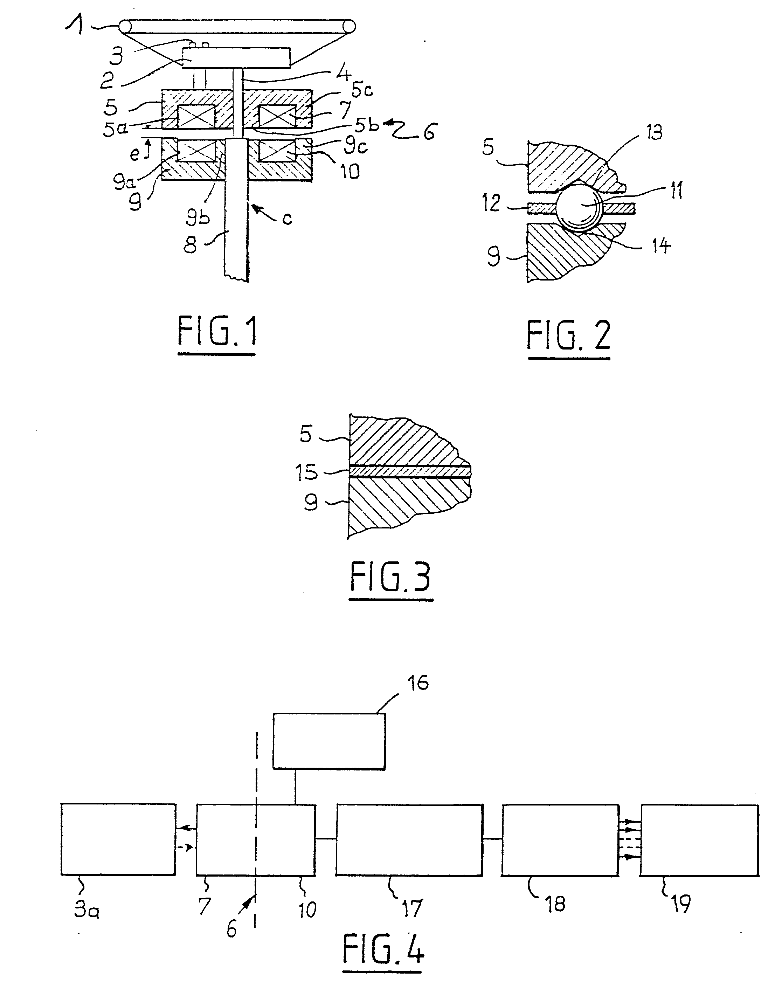

A la Fig. 1, on a représenté un volant 1 de véhicule automobile sur lequel est monté un boîtier 2 supportant des organes de commande 3, le volant étant fixé à un arbre de direction 4.

Une portion 5 de circuit magnétique d'un transformateur 6 est traversée en son centre par l'arbre de direction 4 auquel elle est fixée. Cette portion 5 de circuit magnétique présente un évidement annulaire 5a disposé entre un moyeu 5b et des rebords périphériques 5c, coaxial avec l'arbre de direction 4.

Un enroulement secondaire 7 vient se loger dans cet évidement annulaire 5a.

Une pièce tubulaire fixe 8, constituant avec l'arbre de direction 4 une colonne de direction C, traverse une portion 9 de circuit magnétique du transformateur 6. Cette portion de circuit magnétique 9 est solidaire de la pièce tubulaire 8 et présente également un évidement annulaire 9a, disposé entre un moyeu 9b et des rebords périphériques 9c, coaxial avec l'arbre de direction 4. Un enroulement primaire 10 vient se loger dans cet évidement 9a.

Les portions 5, 9 de circuit magnétique sont constituées par des culasses cylindriques.

Les surfaces des portions de circuit magnétique 9 et 5 en regard l'une de l'autre sont circulaires et définissent entre elles un entrefer *e*. Cet entrefer est maintenu constant, ainsi qu'il est représenté sur la Fig. 2, par des billes 11 montées dans une cage 12. Cette cage est destinée à maintenir les billes dans une position relative déterminée. Des logements 13 et 14 sont prévus dans les portions de circuit magnétique 5 et 9, et plus particulièrement dans les rebords périphériques 5*c* et 9*c* respectivement, afin de constituer des chemins de roulement pour les billes.

L'entrefer *e* peut également être maintenu constant en interposant, comme représenté sur la Fig. 3, entre les portions de circuit magnétique 5 et 9, une cale ou une rondelle antifriction 15, par exemple en bronze ou en tout métal approprié.

On trouve, sur la Fig. 4, un dispositif de commande 3*a* comportant les organes de commande relié à l'enroulement secondaire 7 du transformateur 6. L'enroulement primaire 10 du transformateur 6 est relié d'une part à un dispositif d'alimentation 16 et d'autre part à un dispositif de détection des informations 17 dont la sortie est reliée à un dispositif de reconnaissance des informations 18. Les différentes sorties de ce dispositif 18 sont reliées à un dispositif de commande de charges 19 telles qu'un avertisseur, des projecteurs ou autres.

Ainsi qu'on l'a déjà décrit, le boîtier 2 dans lequel est monté le dispositif 3*a* et la portion de circuit magnétique 5 du transformateur 6 sont solidaires du volant et donc mobiles en rotation par rapport à la portion de circuit magnétique 9 du transformateur et aux éléments qui lui sont connectés.

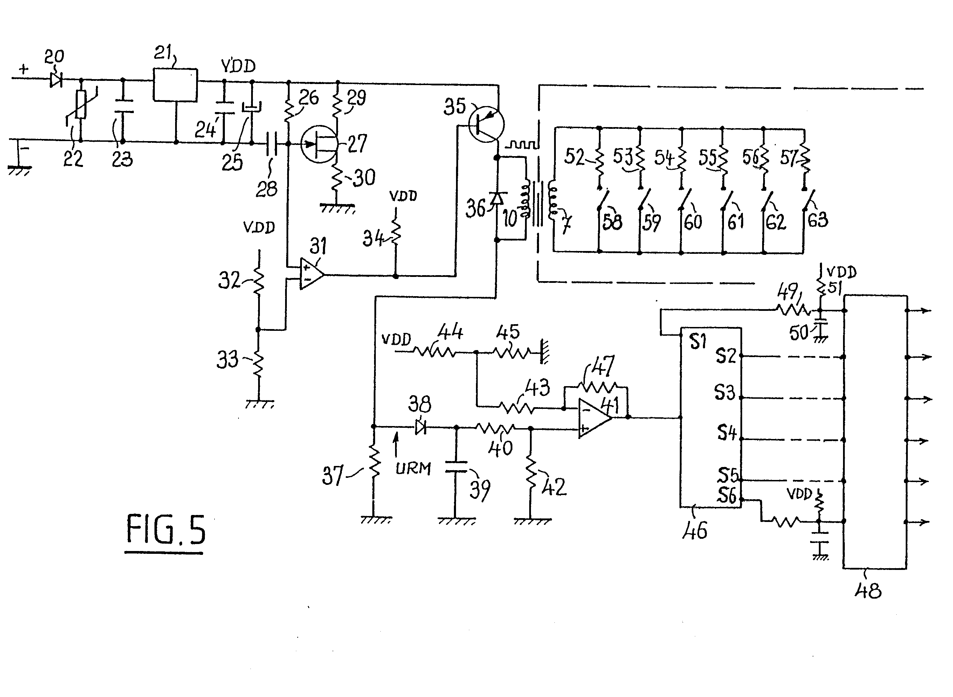

Le dispositif de commande va maintenant être décrit plus en détail en référence à la Fig. 5.

La borne positive de la batterie du véhicule est reliée à l'anode d'une diode 20 dont la cathode est reliée à la borne d'entrée d'un dispositif de régulation de tension 21. Cette borne d'entrée est également reliée à la masse à travers une varistance 22 et un condensateur 23 en parallèle. La borne de sortie du dispositif 21, délivrant une tension régulée VDD, est également reliée à la masse à travers deux condensateurs 24 et 25 en parallèle.

Cette borne de sortie est également reliée à une borne d'une résistance 26 dont l'autre borne est reliée à la grille d'un transistor unijonction 27. Cette grille du transistor 27 est également reliée à la masse à travers un condensateur 28. Le drain de ce transistor 27 est relié à une extrémité d'une résistance 29 dont l'autre extrémité est reliée à la borne de sortie du dispositif 21. La source du transistor 27 est reliée à la masse à travers une résistance 30.

La grille du transistor 27 est également reliée à l'entrée non inverseuse d'un amplificateur opérationnel 31. Une branche composée de deux résistances en série 32 et 33 possède une de ses extrémités reliée à la borne de sortie du dispositif 21 délivrant la tension régulée VDD et l'autre extrémité reliée à la masse. Le point milieu de cette branche est relié à l'entrée inverseuse de l'amplificateur 31.

La sortie de cet amplificateur 31 est reliée à une borne d'une résistance 34 dont l'autre borne est reliée à la tension régulée VDD. Cette sortie de l'amplificateur 31 est également reliée à la base d'un transistor PNP 35 dont l'émetteur est relié à la borne de sortie du dispositif 21.

Le collecteur du transistor PNP 35 est relié à la cathode d'une diode 36 et à une borne de l'enroulement primaire 10 du transformateur 6.

Cette partie du schéma correspond donc au dispositif d'alimentation 16 (Fig. 4).

L'autre borne de l'enroulement primaire 10 est reliée à l'anode de la diode 36 et à une borne d'une résistance 37 dont l'autre borne est reliée à la masse.

Dans le présent exemple, six branches composées de résistances 52 à 57 en série avec des commutateurs 58 à 63 respectivement, représentant le dispositif de commande 3*a* (Fig. 4) comportant les organes de commande, sont connectées en parallèle aux bornes de l'enroulement secondaire 7 du transformateur 6.

L'anode de la diode de roue libre 36 est également reliée à l'anode d'une diode 38 dont la cathode est reliée, d'une part, à la masse à travers un condensateur 39 et, d'autre part, à une borne d'une résistance 40 dont l'autre borne est reliée à l'entrée non inverseuse d'un amplificateur opérationnel 41. Cette entrée non inverseuse est également reliée à la masse à travers une résistance 42. L'entrée inverseuse de l'amplificateur 41 est reliée à une borne d'une résistance 43 dont l'autre borne est reliée au point milieu d'une branche composée de deux résistances 44 et 45 en série. Une extrémité de cette branche est reliée à la tension régulée VDD et l'autre, à la masse.

La sortie de l'amplificateur 41 est reliée, d'une part, à une borne d'entrée d'un dispositif de sélection de niveau de tension 46 et, d'autre part, à l'entrée inverseuse dudit amplificateur 41 à travers une résistance 47.

Les bornes de sortie S1 à S6 de ce dispositif de sélection de niveau 46 sont toutes connectées de la même manière à un dispositif d'utilisation 48. Seule la connexion de la borne de sortie S1 sera décrite.

Cette borne est reliée à une extrémité d'une résistance 49 dont l'autre extrémité est reliée à la masse à travers un condensateur 50, à la tension régulée VDD à travers une résistance 51 et enfin à une borne d'entrée du dispositif d'utilisation 48. Cette partie de la description correspond donc au dispositif de détection des informations 17 et au dispositif de reconnaissance des informations 18 (Fig. 4).

Le dispositif d'utilisation 48 commande quant à lui les différentes charges (avertisseur, projecteur, ...) auxquelles il est connecté par l'intermédiaire d'une interface de puissance non représentée.

Le fonctionnement du dispositif est le suivant.

Le dispositif de régulation de tension 21 délivre une tension régulée VDD assez basse pour que le fonctionnement du dispositif ne soit pas affecté par des variations de tension du réseau de bord qui est, par exemple, de 7 à 8 volts pour un réseau de bord de 12 volts.

La tension régulée VDD est appliquée, en outre, aux bornes de la branche composée de la résistance 26 en série avec le condensateur 28 qui se charge à travers cette résistance 26. Lorsque la tension aux bornes dudit condensateur 28 est suffisamment élevée, le transistor unijonction 27 se débloque et le condensateur 28 se décharge à travers la résistance 30 et le transistor 27, ce qui provoque une chute de tension aux bornes du condensateur 28.

Le transistor 27 se rebloque, le condensateur 28 peut se recharger et le processus déjà décrit se reproduit.

On trouve donc aux bornes du condensateur 28 un signal en dents de scie qui est mis en forme par l'amplificateur opérationnel 31. Cet amplificateur 31 transforme le signal en dents de scie en un signal périodique formé de créneaux carrés ou rectangulaires, qui est amplifié par le transistor 35 puis appliqué aux bornes de l'enroulement primaire 10 du transformateur 6.

Le rapport cyclique de ce signal peut être réglé par les résistances 32 et 33.

On retrouve ce signal en créneaux aux bornes de l'enroulement secondaire 7, au rapport de transformation près (qui peut être égal à 1) et aux bornes des six branches connectées en parallèle sur cet enroulement secondaire 7 et comportant les organes de commande décrits plus haut.

Le courant traversant l'enroulement secondaire 7 est fonction de la charge qui est branchée à ses bornes. Cette charge est constituée par les résistances 52 à 57 en série avec les commutateurs 58 à 63 respectivement qui sont toutes de valeurs différentes. Ainsi, selon que les commutateurs 58 à 63, représentant les organes de commande, sont ouverts ou fermés, on trouve ou non les résistances 52 à 57 correspondantes, branchées en parallèle aux bornes de l'enroulement secondaire 7. Ces résistances étant de valeurs différentes, chaque état de la charge est caractérisé par un courant différent traversant l'enroulement secondaire 7. Ce courant se retrouve dans l'enroulement primaire 10, au rapport de transformation près, et traverse la résistance 37 aux bornes de laquelle on trouve une tension URM proportionnelle au courant la traversant, qui est lui-même fonction des organes de commande actionnés sur le boîtier 2 solidaire du volant.

Ce signal en créneaux de tension peut donc varier entre deux valeurs, une valeur minimum Vmin représentant le cas où aucun des organes de commande n'est actionné; le courant traversant la résistance 37 est donc le courant consommé à vide par le transformateur et une valeur maximum Vmax représentant le cas où tous les organes de commande pouvant être actionnés en même temps, le sont.

Ce signal est ensuite redressé et lissé par la diode 38 et le condensateur 39 de manière à obtenir un signal de tension continu.

L'amplificateur 41 et les éléments qui lui sont associés permettent de ramener la tension Vmin à 0 et la tension Vmax à une valeur correspondante. Cette tension est appliquée à l'entrée du dispositif de sélection de niveau de tension 46 qui interroge les sorties S1 à S6 successivement, avec un intervalle de temps t, en les faisant passer à l'état haut brièvement. Ces sorties sont caractérisées par un certain niveau de tension et elles ne resteront à l'état haut que si la tension correspondante, ou la somme des tensions lorsque par exemple deux ou plusieurs organes de commande sont actionnés, est égale à la tension d'entrée dudit dispositif 46.

Chaque sortie S1 à S6 de ce dispositif est associée à un circuit retardateur constitué par les résistances 49 et 51 et le condensateur 50, de sorte que le retard t1 apporté est supérieur à l'intervalle d'interrogation t. Ainsi, seules les sorties correspondant à l'ordre donné resteront à l'état haut car le temps de maintien de l'actionnement de l'un des organes de commande 58 à 63 est toujours supérieur à t1, c'est-à-dire au retard apporté.

Les sorties des circuits retardateurs sont ensuite appliquées aux entrées du dispositif d'utilisation 48 auquel est connectée l'interface de puissance (non représentée).

Les résistances 52 à 57 sont choisies de manière que la variation de l'intensité résultante dans l'enroulement primaire 10 du transformateur 6 soit assez sensible pour que les variations de la tension URM aux bornes de la résistance 37 soient facilement reconnaissables par le dispositif 46.

Le tableau ci-dessous donne les valeurs des différents éléments entrant dans un exemple de réalisation d'un dispositif de transmission selon l'invention:
— Nombre d'ordres: 6
— Transformateur:
    Carcasse en acier extra-doux
    Bobines semblables 1210 spires
    Fil de diamètre 0,355 mm
    Rapport de transformation: 1
    Entrefer e calibré: 0,2 mm
— Charge variable au secondaire (résistances)
    52 : 560
    53 : 135
    54 :  82
    55 :  37
    56 :  33
    51 :  10
— Signal en créneaux de tension d'alimentation de l'enroulement primaire de fréquence 70 Hz et de rapport cyclique 14%
— Condensateurs 23 et 24: 0,2 mF
— Condensateurs 28, 39, 50: 1 mF (tantale)
— Condensateurs 25: 2200 mF
— Résistances:
    26: 12 K
    29: 390, 30, 32, 33 : 15; 36, 43, 44, 45, 47 : 68 K
    40, 42: 1 M
    49: 150 K; 51: 470 K
    37: 22
— Diodes:
    20: 1N 4004; 36: BYW29
    38: 1N 4148
— Transistors:
    35: BD 442; 27: 2 N2646
— Amplificateurs 31 et 41: LM 2903

— Dispositif de sélection de niveau de tension 46: LM 3914
— Dispositif d'utilisation 48: CD 40106
— $t_1$: 250 ms

## Revendications

1. Dispositif de transmission d'informations issues de plusieurs organes de commande (3) montés sur un volant de direction (1) porté par une colonne de direction (C), d'un véhicule automobile, à un système de reconnaissance des informations solidaire du véhicule, comportant un transformateur (6) dont les enroulements primaire (10) et secondaire (7) sont montés à rotation l'un par rapport à l'autre et portés chacun par une portion de circuit magnétique (5, 9), l'une desdites portions de circuit magnétique étant solidaire du volant de direction (1) et l'autre, du véhicule, les surfaces des portions de circuit magnétique (5, 9) en regard l'une de l'autre étant circulaires et définissant entre elles un entrefer (e), caractérisé en ce qu'il comprend en outre des moyens destinés à maintenir constant l'entrefer (e) entre lesdites portions (5, 9) de circuit magnétique dudit transformateur (6) lors du déplacement angulaire relatif desdites portions de circuit magnétique.

2. Dispositif de transmission d'informations selon la revendication 1, caractérisé en ce que la colonne de direction (C) du véhicule étant constituée d'un arbre de direction (4) et d'une pièce tubulaire fixe (8), la portion (5) de circuit magnétique portant l'enroulement secondaire (7) est solidaire de l'arbre de direction (4) et la portion de circuit magnétique (9) portant l'enroulement primaire (10) est solidaire de la pièce tubulaire (8).

3. Dispositif de transmission d'informations selon la revendication 1 ou 2, caractérisé en ce que lesdits moyens destinés à maintenir constant l'entrefer (e) sont constitués par des billes (11), se logeant entre les portions (5, 9) de circuit magnétique et venant prendre appui dans des logements (13, 14) prévus à cet effet dans lesdites portions de circuit magnétique.

4. Dispositif de transmission d'informations selon la revendication 1 ou 2, caractérisé en ce que lesdits moyens destinés à maintenir constant l'entrefer (e) sont constitués par une bague antifriction (15) interposée entre les portions (5, 9) de circuit magnétique dudit transformateur (6).

5. Dispositif de transmission d'informations selon l'une quelconque des revendications précédentes, caractérisé en ce que lesdites portions (5, 9) de circuit magnétique sont constituées par des culasses cylindriques comportant des évidements annulaires (5a, 9a) dans lesquels sont logés les enroulements secondaire (7) et primaire (10) respectivement, l'entrefer (e) étant défini par des rebords annulaires (5c, 9c) délimitant lesdits évidements.

6. Dispositif de transmission d'informations selon l'une quelconque des revendications précédentes, caractérisé en ce qu'il comporte des moyens (16) pour appliquer un signal périodique aux bornes de l'enroulement primaire (10) du transformateur (6), des moyens (3a) connectés aux bornes de l'enroulement secondaire (7) dudit transformateur (6) pour modifier l'intensité dudit signal périodique, des moyens (17) de détection dudit signal périodique, des moyens (18) de reconnaissance des modifications d'intensité et des moyens (19) commandés par lesdits moyens de reconnaissance pour actionner les charges correspondant aux informations transmises.

7. Dispositif de transmission d'informations selon la revendication 6, caractérisé en ce que lesdits moyens (16) destinés à appliquer un signal périodique aux bornes de l'enroulement primaire (10) du transformateur (6) sont constitués par un générateur de signal en dents de scie (26, 27, 28) auquel est connecté un amplificateur opérationnel (31) destiné à transformer ledit signal en dents de scie en un signal périodique, le dispositif comportant en outre des moyens (32, 33) de réglage du rapport cyclique dudit signal périodique, associés audit amplificateur opérationnel.

8. Dispositif de transmission d'informations selon la revendication 7, caractérisé en ce que lesdits moyens (3a) pour modifier l'intensité du signal périodique traversant ledit enroulement primaire (10) sont constitués par des résistances (52 à 57) connectées, par l'intermédiaire de commutateurs (58 à 63) correspondants, aux bornes dudit enroulement secondaire (7).

9. Dispositif de transmission d'informations selon la revendication 8, caractérisé en ce que les moyens (18) de reconnaissance des modifications d'intensité traversant ledit enroulement primaire (10) du transformateur (6) comprennent un dispositif de sélection de niveau de tension (46) dont les sorties (S1 à S6) sont connectés au dispositif d'utilisation (48) commandant les différentes charges.

## Patentansprüche

1. Vorrichtung zur Übertragung von Informationen, die von mehreren Steuerorganen (3) abgegeben werden, die am Lenkrad (1) angebracht sind, das von einer Lenksäule (C) eines Kraftfahrzeugs getragen wird an ein Informationswiederkennungssystem, das mit dem Fahrzeug verbunden ist, mit einem Transformator (6) dessen Primärwicklung (10) und dessen Sekundärwicklung (7) zu einander verdreht angeordnet und jeweils von einem Teil des Magnetkreises (5, 9) getragen werden, wobei einer der Teile des Magnetkreises am Lenkrad (1) und der andere am Fahrzeug befestigt ist, wobei die Oberflächen der Teile des Magnetkreises (5, 9), die sich gegenüber liegen kreisförmig sind und zwischen sich einen Luftspalt (e) bilden, dadurch gekennzeichnet, dass die Vorrichtung ausserdem Organe zum Konstanthalten des Luftspalts (e) zwischen den Teile (5, 9) des Magnetkreises des Transformators (6) während des winkelmässigen Versetzens der Teile des Magnetkreises relativ zu einander aufweist.

2. Vorrichtung zur Übertragung von Informationen nach Anspruch 1, dadurch gekennzeichnet, dass die Lenksäule (C) des Fahrzeugs aus einer Lenkwelle (4) und einem festen rohrförmigen Teil (8) besteht, wobei der Teil (5) des Magnetkreises, der die Sekundärwicklung (7) trägt, mit der Lenkwelle (4) starr verbunden ist und der Teil des Magnetkreises (9), der die Primärwicklung (10) trägt, mit dem rohrförmigen Teil (8) starr verbunden ist.

3. Vorrichtung zur Übertragung von Informationen nach den Ansprüchen 1 oder 2, dadurch gekennzeichnet, dass die Organe zum Konstanthalten des Luftspalts (e) aus Kugeln (11) bestehen, die zwischen den Teilen (5, 9) des Magnetkreises gelagert sind und in Lagern (13, 14) ruhen, die zu diesem Zweck in den Teilen des Magnetkreises eingearbeitet sind.

4. Vorrichtung zur Übertragung von Informationen nach Anspruch 1 oder 2, dadurch gekennzeichnet, dass die Organe zum Konstanthalten des Luftspalts (e) aus einem Antireibungsring (15) bestehen, der zwischen die Teile (5, 9) des Magnetkreises des Transformators (6) angeordnet ist.

5. Vorrichtung zur Übertragung von Informationen nach einem der vorstehenden Ansprüche, dadurch gekennzeichnet, dass die Teile (5, 9) des Magnetkreises aus zylinderförmigen Magnetjochen bestehen, die ringförmige Ausnehmungen (5a, 9a) aufweisen, in denen die Sekundärwicklung (7) bzw. Primärwicklung (10) untergebracht sind, wobei der Luftspalt (e) durch ringförmige Ränder (5c, 9c) definiert wird, die die Ausnehmungen begrenzen.

6. Vorrichtung zur Übertragung von Informationen nach einem der vorstehenden Ansprüche, dadurch gekennzeichnet, dass die Vorrichtung Organe (16) zum Anlegen eines periodischen Signals an die Klemmen der Primärwicklung (10) des Transformators (6), Mittel (3a), die an die Klemmen der Sekundärwicklung (7) des Transformators (6) geschaltet sind zum Verändern der Intensität des periodischen Signals, Mittel (17) zum Erfassen des periodischen Signals, Mittel (18) zum Erkennen von Änderungen der Intensität und Mittel (19), die von den Erkennungsmitteln gesteuert werden zum Betätigen bestimmter Lasten entsprechend der übertragenen Informationen, aufweist.

7. Vorrichtung zum Übertragen von Informationen nach Anspruch 6, dadurch gekennzeichnet, dass die Mittel (16) zum Anlegen eines periodischen Signals an den Klemmen der Primärwicklung (10) des Transformators (6) aus einem Sägezahn-Signalgenerator (26, 27, 28) bestehen, an dem ein Operationsverstärker (31) angeschlossen ist, der dazu bestimmt ist, das Sägezahnsignal in ein periodisches Signal umzuwandeln, wobei die Vorrichtung ausserdem Mittel (32, 33) zum Einstellen des zyklischen Verhältnisses des periodischen Signals aufweist, die mit dem Operationsverstärker verbunden sind.

8. Vorrichtung zum Übertragen von Informationen nach Anspruch 7, dadurch gekennzeichnet, dass die Mittel (3a) zum Ändern der Intensität des periodischen Signals, das die Primärwicklung (10) durchläuft aus Widerständen (52 bis 57) bestehen, die über entsprechende Umschalter (58 bis 63) an die Klemmen der Sekundärwicklung (7) geschaltet sind.

9. Vorrichtung zum Übertragen von Informationen nach Anspruch 8, dadurch gekennzeichnet, dass die Mittel (18) zum Erkennen von Änderungen der Intensität, der Signale, die die Primärwicklung (10) des Transformators (6) durchlaufen eine Vorrichtung zum Auswählen des Spannungspegels (46) aufweisen, deren Ausgänge (S1 bis S6) an den Verbraucher (48), der die verschiedenen Lasten steuert, geschaltet sind.

## Claims

1. A device for transmitting items of information issuing from a plurality of control elements (3) mounted on a steering wheel (1) carried by a steering column (C) of a motor vehicle, to a system recognizing the items of information mounted on the vehicle, comprising a transformer (6) whose primary winding (10) and secondary winding (7) are mounted rotatable with respect to each other and each carried by a magnetic circuit portion (5, 9), one of said magnetic circuit portions being mounted on the steering wheel (1) and the other on the vehicle, the surfaces of the magnetic circuit portions (5, 9a) facing each other being circular and defining therebetween an air gap (e), characterised in that it further comprises means for maintaining the air gap (e) constant between said magnetic circuit portions (5, 9) of said transformer (6) upon the relative angular displacement of said magnetic circuit portions.

2. A device for transmitting items of information according to claim 1, characterised in that, as the steering column (C) of the vehicle is constituted by a steering shaft (4) and a fixed tubular member (8), the magnetic circuit portion (5) carrying the secondary winding (7) is mounted on the steering shaft (4) and the magnetic circuit portion (9) carrying the primary winding (10) is mounted on the tubular member (8).

3. A device for transmitting items of information according to claim 1 or 2, characterised in that said means for maintaining the air gap (e) constant are constituted by balls (11) housed between the magnetic circuit portions (5, 9) and bearing in recesses (13, 14) provided for this purpose in said magnetic circuit portions.

4. A device for transmitting items of information according to claim 1 or 2, characterised in that said means for maintaining the air gap (e) constant are constituted by an anti-friction rind (15) interposed between the magnetic circuit portions (5, 9) of said transformer (6).

5. A device for transmitting items of information according to any one of the preceding claims, characterised in that said magnetic circuit portions (5, 9) are constituted by cylindrical yokes having annular cavities (5a, 9a) in which are disposed the secondary winding (7) and primary winding (10) respectively, the air gap (e) being defined by annular edge portions (5c, 9c) delimiting said cavities.

6. A device for transmitting items of information according to any one of the preceding claims, characterised in that it comprises means (16) for applying a periodic signal to the terminals of the primary winding (10) of the transformer (6), means (3a) connected to the terminals of the secondary winding (7) of said transformer (6) for modifying the intensity of said periodic signal, means (17) for detecting said periodic signal, means (18) for recognizing modifications of intensity and means (19) controlled by said recognizing means for driving the loads corresponding to the transmitted items of information.

7. A device for transmitting items of information according to claim 6, characterised in that said means (16) for applying a periodic signal to the terminals of the primary winding (10) of the transformer (6) are constituted by a sawtooth signal generator (26, 27, 28) to which is connected an operational amplifier (31) for transforming said sawtooth signal into a periodic signal, the device further comprising means (32, 33) for regulating the cyclic ratio of said periodic signal associated with said operational amplifier.

8. A device for transmitting items of information according to claim 7, characterised in that said means (3a) for modifying the intensity of the periodic signal passing through said primary winding (10) are constituted by resistors (52 to 57) connected through corresponding commutators (58 to 63) to the terminals of said secondary winding (7).

9. A device for transmitting items of information according to claim 8, characterised in that the means (8) for recognizing modifications of intensity passing through said primary winding (10) of the transformer (6) comprise a voltage level selecting device (46) whose outputs (S1 to S6) are connected to the utilization device (48) driving the various loads.

0 183 580

FIG.1

FIG.2

FIG.3

FIG.4

FIG.5

0 183 580